# EUROPÄISCHE PATENTSCHRIFT

(11) **EP 1 989 878 B1**
(45) Veröffentlichungstag und Bekanntmachung des Hinweises auf die Patenterteilung: **05.05.2010**
(21) Anmeldenummer: 07704483.2
(22) Anmeldetag: 09.02.2007
(51) Int. Cl.: H04N 7/173

(54) **VERFAHREN ZUM ÜBERTRAGEN EINER ÄNDERUNG EINES STATISCHEN OBJEKTS MIT EINEM ÄNDERUNGSOBJEKT IN EINEM DATENVERTEILDIENST, SOWIE SENDER UND EMPFÄNGER**
METHOD FOR TRANSMISSION OF A CHANGE TO A STATIC OBJECT BY MEANS OF A CHANGE OBJECT IN A DATA DISTRIBUTION SERVICE, TRANSMITTER AND RECEIVER
PROCÉDÉ POUR TRANSMETTRE UNE MODIFICATION D'UN OBJET STATIQUE AU MOYEN D'UN OBJET DE MODIFICATION DANS UN RÉSEAU DE DISTRIBUTION DE DONNÉES, ÉMETTEUR ET RÉCEPTEUR

(30) Priorität: 23.02.2006 DE 102006008471
(43) Veröffentlichungstag der Anmeldung: 12.11.2008
(73) Patentinhaber: Nokia Siemens Networks GmbH & Co. KG, 81617 München (DE)
(72) Erfinder: HEUER, Jörg, 82041 Oberhaching (DE); WINTER, Martin, 83024 Rosenheim (DE)
(86) Internationale Anmeldenummer: PCT/EP2007/051268
(87) Internationale Veröffentlichungsnummer: WO 2007/096257

(56) Entgegenhaltungen:
- EP-A- 1 383 335
- US-A- 5 844 620
- US-A1- 2003 030 658
- US-A1- 2004 031 061

## Beschreibung

Die Erfindung betrifft ein Verfahren zum Übertragen einer Änderung eines statischen Objekts mit einem Änderungsobjekt in einem Datenverteildienst, sowie einen Sender und eine Empfänger.

Bei heutigen Nachrichtenverteildiensten, wie zum Beispiel einem Rundfunksystem gemäß Standard DVB-T (DVB-T - Digital Video Broadcast Terrestrial) werden zwei Arten einer Datenübertragung unterstützt:
- Karussellübertragung:
   Hierbei werden Daten als statische Objekte übertragen. Dabei erfolgt eine Wiederholung der statischen Objekte von Zeit zu Zeit und eine Übertragung der statischen Objekte in einer durch einen Sender vorgegeben Reihenfolge. Mit Hilfe eines Übertragungsmusters werden die zu übertragenden statischen Objekte einem Empfänger angekündigt. Die statischen Objekte werden nach Empfang beispielsweise zum Abruf durch einen Benutzer zwischengespeichert. Bei DVB-T werden ein elektronischer Programmführer (EPG - Electronic Programme Guide) und Teletextseiten mittels der Karussellübertragung übermittelt.
- Streamingübertragung:
   Hierbei werden zumeist audiovisuelle Daten in Echtzeit, d.h. Echtzeitdaten, an den Empfänger übertragen. Diese Echtzeitdaten werden ohne große zeitliche Verzögerung zum Beispiel am Fernseher eines Benutzers ausgegeben.

Bei der Karussellübertragung werden statische Objekte unter Berücksichtigung des Übertragungsmusters übermittelt. Dabei zeigt sich jedoch, dass nach Festlegen des Übertragungsmusters ein Vorziehen aktuell wichtiger statischer Objekte bei der Übertragung nicht möglich ist, da ein neues statisches Objekt erst mittels des Übertragungsmusters angekündigt werden muss. Hierdurch ergibt sich eine große Reaktionszeit. Ferner ist nachteilig, dass der Empfänger permanent die Karussellübertragung nach neuen Übertragungsmustern absuchen muss.

Eine Verbesserung hierzu kann mit Hilfe eines Ankündigungskanals (Announcement-Channel) erreicht werden. Der Ankündigungskanal teilt dem Empfänger mit, dass für eine bestimmte Karussellübertragung eine Änderung des Übertragungsmusters des Karussells stattfinden wird. Dieser Ansatz verbessert jedoch die Reaktionszeit nicht, da ein Empfänger, getriggert durch den Ankündigungskanal, zunächst auf das neue Übertragungsmuster der angekündigten zu ändernden Karussellübertragung warten muss, um danach das benötigte statische Objekt aus der Karussellübertragung herausfiltern zu können.

Aus der Druckschrift EP-A-1 383 335 (ENSEQUENCE INC [US]), 21. Januar 2004 (2004-01-21) sind ein Verfahren, ein Computer-lesbares Medium und ein Datensystem bekannt zum Anzeigen, wenn eine ersetzte Datendatei in einer Aufeinanderfolge von Datendateien durch eine geänderte Datendatei ersetzt worden ist. Hierzu wird eine Indexdatei geschaffen und in die Aufeinanderfolge von Datendateien eingefügt. Die Indexdatei umfasst einen Änderungsindikator, welcher kennzeichnet, dass die geänderte Datendatei die ersetzte Datendatei ersetzt hat. Die Indexdatei wird wiederholt übertragen mit der Aufeinanderfolge der Datendateien.
Insbesondere ist eine Übertragung einer Änderung einer Datendatei in einem Datenverteildienst dargestellt. Ferner ist aufgezeigt, dass Datendateien mittels einer Karussellübertragung übermittelt werden und dass Audio- und Videoausgangsmaterial in Form eines Broadcastdatenstroms übertragen wird.

Aus der Druckschrift US 2004/031061 A1 (MCCALLA JOHN [CA] ET AL), 12. Februar 2004 (2004-02-12) sind ein System und ein Verfahren zur Bereitstellung von Realzeit-Ticker-Information bekannt. Generell werden Probleme adressiert, welche assoziiert sind beispielsweise mit der Bereitstellung eines Ticker-Dienstes auf einem Gerät mit begrenzten Graphik-, Speicher- und verarbeitungsfähigkeiten. Hierbei ist der Ticker-Dienst eine automatische Anzeige textlicher Information, wie zum Beispiel auf Nachrichten bezogene Gegenstände, Nachrichtengeschichten, Aktienkurse, Wetter, Sportinformation, usw., insbesondere beispielsweise über ein interaktives Fernsehmedium. Ein Zuschauer oder Teilnehmer kann während des Sehens des regulären Fernsehprogramms Information beobachten, welche durch den Ticker-Dienst auf seinem Fernsehgerät angezeigt wird.

Aus der Druckschrift US-A-5 844 620 (COLEMAN MISTI [US] ET AL), 1. Dezember 1998 (1998-12-01) sind ein Verfahren und eine Vorrichtung bekannt für die Anzeige eines interaktiven Ferasehprogrammführers. Eine interaktive, auf dem Bildschirm sichtbare Schnittstelle führt den Nutzer durch ein Menü von individuellen, über ein Informationsnetz verfügbaren Ereignissen, während sie das Weiterbestehen des Sehens des aktuellen Kanals erlaubt. Ein Schmalbanddatenstrom stellt Programminformation zur Verfügung für eine aktuelle Zeitperiode, z. B. die nächsten 48 Stunden, und wird in einem lokalen Speicher für unmittelbar erfolgenden zugriff gespeichert. Ein Anforderungsdatenstrom stellt Programminformation zur Verfügung für eine zukünftige zeitperiode, beispielsweise eine Woche jenseits der aktuellen zeitperiode, und wird auf Realzeitbasis erlangt in Beantwortung einer Anforderung eines Teilnehmers hinsichtlich zukünftiger zeitplanungsinformation.

Aus der Druckschrift US 2003/030658 A1 (GIBBS SIMON [US] ET AL), 13. Februar 2003 (2003-02-13) sind ein System und ein Verfahren bekannt zur simultanen Anzeige einer virtuellen Szene und einer realen Szene, bei dem ein Instrumentationsdatenstrom von einem Sensor erkannt wird, bei dem ein Videostroh eines realen Ereignisses von einer Kamera erfasst wird und bei dem ein virtuelles Bild abgegeben wird, welches einen Anzeigebereich enthält zur Anzeige des Videostroms, wobei der Anzeigebereich in Abhängigkeit von dem Instrumentationsdatenstrom positioniert wird.

In einer anderen bekannten Ausführungsform wird ein statisches Objekt zum Empfänger übertragen. Im Empfänger wird dieses statische Objekt derart zwischengespeichert, dass es zunächst nicht ausgewertet wird. Aufgrund eines Hinweissignals in der Streaming-Übertragung wird für das, vorab übertragene, statische Objekt dem Empfänger mitgeteilt, dass das statische Objekt ausgewertet, zum Beispiel durch Änderung eines anderen statischen Objekts, werden kann. Bei dieser Variante ist vorteilhaft, dass das statische Objekt erst zu einem durch das Hinweissignal getriggerten Zeitpunkt angewendet wird. Jedoch muss das statische Objekt vorab zum Empfänger übertragen werden, so dass hiermit aktuelle Informationen, wie brandneue Nachrichten, nicht in Echtzeit übertragen werden können.

Unter aktuell wichtigen Daten bzw. Informationen sind im Rahmen dieser Beschreibung Inhalte zu verstehen, die im momentanen Zeitpunkt erstellt und in Echtzeit an den Empfänger übertragen werden sollen. Als Beispiel für aktuell wichtige Daten ist eine Teletextseite zu verstehen, die zu einem Fußballspiel aktuelle Informationen wie Torstand, Zeitpunkt einzelner Tore und Namen der sich aktuell auf dem Spielfeld befindlichen Fußballspieler dem Benutzer in Echtzeit zur Verfügung stellt. Ferner können wichtige Daten auch einen elektronischen Service Guide (ESG - Electronic Service Guide) mit aktuellen Serviceangeboten oder eine aktualisierte Szenenbeschreibung einer Multimediapräsentation umfassen, wobei die Szenenbeschreibung beispielsweise gemäß einem Standard LASeR (LASeR - Lightweight Application Scene Representation) realisiert sein kann.

Somit ist es die Aufgabe, ein Verfahren sowie einen Sender und eine Empfänger anzugeben, die ein Übertragen einer Änderung eines statischen Objekts in einem Datenverteildienst mit einer kurzen Verzögerungszeit in einfacher Weise ermöglichen.

Diese Aufgabe wird durch die unabhängigen Ansprüche gelöst. Sonstige Weiterbildungen der Erfindung sind in den abhängigen Ansprüchen wiedergegeben.

In einem Verfahren zum Übertragen einer Änderung von einem statischen Objekt mittels eines Änderungsobjekts in einem Datenverteildienst, der statische Objekte mittels einer Karussellübertragung und Echtzeitdaten mittels einer Streamingübertragung übermittelt, werden das Änderungsobjekt auf Basis zumindest einer zu ändernden Information und auf Basis zumindest einer eine Vorgehensweise zur Durchführung der Änderung angebenden Änderungsregel gebildet und das Änderungsobjekt mit der Streamingübertragung übermittelt.

Hierdurch wird die Änderung des statischen Objekts mit Hilfe des Änderungsobjekts in kompakter Form mitgeteilt. Ferner wird aufgrund der Streamingübertragung eine schnelle Übermittlung des Änderungsobjekts von einem Sender zu einem Empfänger gewährleistet. Des Weiteren kann das Verfahren in einfacher Weise in bestehende Datenverteildienste integriert werden, da das Änderungsobjekt bei einem Empfänger, der dieses nicht interpretieren kann, verworfen wird.

Werden ferner das Änderungsob.jekt aus der Streamingübertragung herausgefiltert und das zu ändernde statische Objekt auf Grundlage des Änderungsobjekts in das geänderte statische Objekt geändert, so kann ein Empfänger in einfacher Weise das Änderungsobjekt auswerten und bspw. auch die durchzuführende Änderung umsetzen.

Vorzugsweise wird aufgrund einer die Änderungsregel umfassende Identifikationsangabe das zu ändernde statische Objekt ausgewählt. Hierdurch kann in einfacher Art und Weise das auszuwertende bzw. zu verändernde statische Objekt ausgewählt werden. Wird ferner eine die Änderungsregel umfassende erste Versionsnummer in das zu ändernde statische Objekt eingetragen, so können geänderte von noch nicht geänderten statischen Objekten in einfacher Weise unterschieden werden.

Vorzugsweise wird eine die Änderungsregel umfassende Zeitpunktangabe in das Änderungsobjekt eingetragen, wobei die Zeitpunktangabe einen Zeitpunkt zur Durchführung der Änderungsregel spezifiziert. Hiermit kann ein Ausführungszeitpunkt der Änderungsregel bestimmt werden. Ferner kann bei Empfang des zu ändernden statischen Objekts bei verschiedenen Empfängern zu jeweils unterschiedlichen Zeiten ein zeitlich synchronisiertes Durchführen der Änderungsregel in den Empfängern erreicht werden.

Ferner wird vorzugsweise aufgrund zumindest einer die Änderungsregel umfassenden zweiten Versionsnummer die Änderung des zu ändernden statischen Objekts durchgeführt wird, falls eine weitere Versionsnummer eines weiteren statischen Objekts einen zur zweiten Versionsnummer gleichen oder größeren Wert aufweist. Hiermit kann berücksichtigt werden, dass eine Änderung erst dann durchgeführt wird, falls die weitere Versionsnummer gleich oder größer zur zweiten Versionsnummer ist.

Wird aufgrund zumindest einer zusätzlichen Änderungsregel im Änderungsobjekt ein weiteres statisches Objekt geändert, so können mit Hilfe eines einzigen Änderungsobjekts mehr als ein statisches Objekt geändert werden. Diese Vorgehensweise ist insbesondere für den Fall zweckmäßig, dass durch die Änderung des statischen Objekts weitere statische Objekte geändert werden müssen.

Vorzugsweise wird in einem Sender das zu ändernde statische Objekt auf Grundlage des Änderungsobjekts in das geänderte statische Objekt geändert und zumindest das geänderte statische Objekt über die Karussellübertragung übermittelt. Hierbei wird gewährleistet, dass auch bei einer fehlerhaften Übermittlung des Änderungsobjekts über die Streamingübertragung das zumindest eine geänderte statische Objekt den Empfänger erreicht. Ferner ermöglicht diese Erweiterung, dass ein Empfänger, der erst nach dem Übertragen des Änderungsobjekts einen Empfang von Daten über die Streamingübertragung aufgenommen hat, von der Änderung des zumindest einen statischen Objekts Kenntnis erlangt.

In einer vorzugweisen Erweiterung wird vor der Übertragung das Änderungsobjekt mit einem Fehlerschutzverfahren zur Reduktion von Übertragungsfehlern geschützt. Hierdurch kann eine Quote an fehlerhaft übertragenen Änderungsobjekten reduziert werden.

Die Erfindung betrifft auch einen Sender in einem Datenverteildienst, wobei der Sender statische Objekte mittels einer Karussellübertragung und Echtzeitdaten mittels einer Streamingübertragung übermittelt, bei dem ein erstes Verarbeitungsmodul zum Bilden eines Änderungsobjekts ausgestaltet ist, wobei das Änderungsobjekt eine Angabe einer zu ändernden Information und eine einer Vorgehensweise zur Durchführung der Änderung angebenden Änderungsregel umfasst, und ein Streamingsendemodul zum Übertragen des Änderungsobjekts mittels der Streamingübertragung ausgestaltet ist. Mit Hilfe des Senders ist das Verfahren zum Übertragen einer Änderung eines statischen Objekts senderseitig realisierbar.

Vorzugsweise ist das erste Verarbeitungsmodul zum Bilden des Änderungsobjekts ausgestaltet, wobei das Änderungsobjekt zumindest eine der folgenden Angaben zusätzlich umfasst:
- eine erste Versionsnummer zum Eintragen in das zu ändernde statische Objekt;
- eine zweite Versionsnummer, wobei die Änderung des zu ändernden statischen Objekts durchgeführt wird, falls eine weitere Versionsnummer eines weiteren statischen Objekts einen zur zweiten Versionsnummer gleichen oder größeren Wert aufweist;
- zumindest eine zusätzliche Änderungsregel, zum Ändern eines weiteren statischen Objekts;
- eine die Änderungsregel umfassende Zeitpunktangabe, wobei die Zeitpunktangabe einen Zeitpunkt zur Durchführung der Änderungsregel spezifiziert;
   Hiermit werden Varianten bei der Bildung des Änderungsobjekts definiert, mit denen eine spezifische Vorgehensweise zur Durchführung der Änderung angebbar ist.

Vorzugsweise sind das erste Verarbeitungsmodul zur Änderung des zu ändernden statischen Objekts auf Grundlage des Änderungsobjekts in das geänderte statische Objekt und zum Weiterleiten zumindest des geänderten statischen Objekts an ein Karussell und das Karussell zum Übermitteln zumindest des geänderten statischen Objekts über die Karussellübertragung an den Empfänger ausgestaltet. Dies ist vorteilhaft, da die Änderung zusätzlich zum Änderungsobjekt auch mit Hilfe des geänderten statischen Objekts über die Karussellübertragung dem Empfänger mitteilbar ist.

Die Erfindung betrifft des Weiteren einen Empfänger in einem Datenverteildienst, wobei der Empfänger statische Objekte mittels einer Karussellübertragung und Echtzeitdaten mittels einer Streamingübertragung empfängt, bei dem ein Auswahlmittel zum Trennen der Echtzeitdaten und eines Änderungsobjekts empfangen von der Streamingübertragung und ein Karussellverarbeitungsmittel zum Auswerten des Änderungsobjekts auf Basis zumindest einer das Änderungsobjekt umfassenden zu ändernde Information und einer Änderungsregel ausgestaltet sind. Der Empfänger ermöglicht eine Realisierung des Verfahrens zum Übertragen einer Änderung eines statischen Objekts empfängerseitig.

Vorzugsweise ist das Karussellverarbeitungsmittel zur Änderung des zu ändernden statischen Objekts auf Grundlage des Änderungsobjekts in das geänderte statische Objekt ausgestaltet, womit die Änderung realisierbar ist.

In einer vorzugsweisen Erweiterung ist das Karussellverarbeitungsmittel zur Änderung des zumindest einen statischen Objekts zusätzlich auf Basis einer der folgenden Anweisungen ausgestaltet:
- Auswählen des zu ändernden statischen Objekts aufgrund einer die Änderungsregel umfassenden Identifikationsangabe;
- Eintragen einer die Änderungsregel umfassende erste Versionsnummer in das zu ändernde statische Objekt;
- Durchführen der Änderung des zu ändernden statischen Objekts aufgrund zumindest einer die Änderungsregel umfassenden zweiten Versionsnummer, falls eine weitere Versionsnummer eines weiteren statischen Objekts einen zur zweiten Versionsnummer gleichen oder größeren Wert aufweist;
- Änderung eines weiteren statischen Objekts aufgrund zumindest einer zusätzlichen Änderungsregel im Änderungsobjekt;
- Ändern des zu ändernden statischen Objekts auf Grundlage des über die Karussellübertragung empfangenen Änderungsobjekts;
- Ausführen der Änderungsregel zu einer die Änderungsregel umfassenden Zeitpunkt angabe.
   Hiermit werden Varianten bei der Bildung des Änderungsobjekts definiert, mit denen eine spezifische Vorgehensweise zur Durchführung der Änderung angebbar ist.

Vorzugsweise ist ein Auswahlmittel zum Korrigieren von aufgrund einer fehlerhaften Streamingübertragung auftretenden Fehlern auf Basis eines Fehlerschutzverfahrens ausgestaltet.

Hierdurch kann eine Quote an fehlerhaft übertragenen Änderungsobjekten reduziert werden.

Die Erfindung und ihre Weiterbildungen werden anhand der Zeichnung näher erläutert. Es zeigen:
- Figur 1: ein Ausführungsbeispiel mit einem Datenverteildienst, aufweisend eine Karussellübertragung und eine Streamingübertragung;
- Figur 2: Aufbau eines Änderungsobjekts;
- Figur 3: Änderung eines statischen Objekts in Abhängigkeit von einem weiteren statischen Objekt;
- Figur 4: Änderung des statischen Objekts und eines weiteren statischen Objekts in Abhängigkeit des Änderungsobjekts;

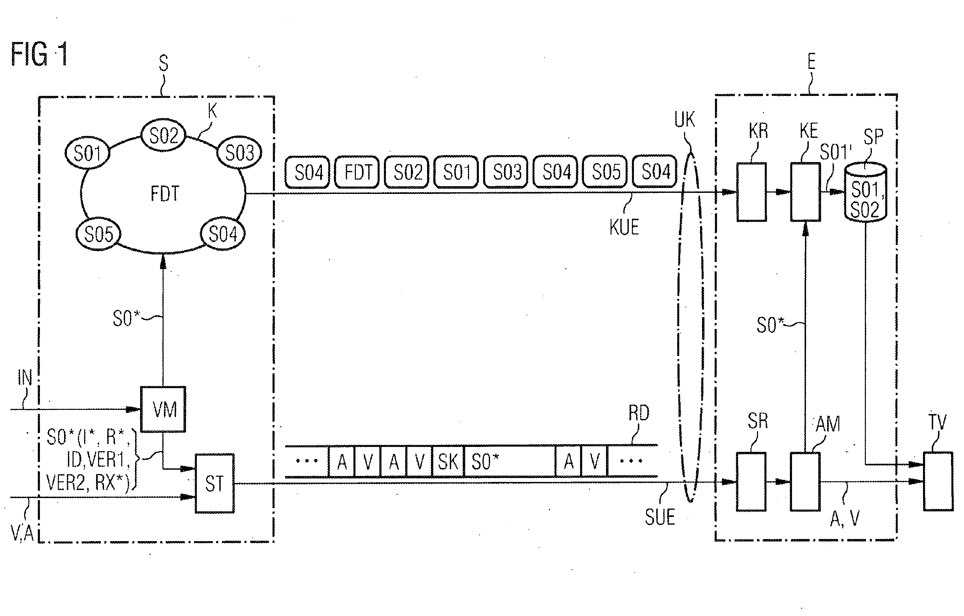

Elemente mit gleicher Funktion und Wirkungsweise sind in den Figuren 1 bis 4 mit denselben Bezugszeichen versehen.

Ein erstes Ausführungsbeispiel wird anhand von Figur 1 näher erläutert. Figur 1 zeigt ein System, bestehend aus einem Sender S, einem Empfänger E und einem Übertragungskanal UK. Der Sender S realisiert eine Verteilung von Daten in einem Datenverteildienst. Der Datenverteildienst arbeitet bspw. gemäß dem DVB-T Standard. Der Sender kann als Server in einem Anbieternetzwerk realisiert sein. Die Daten des Datenverteildienstes werden drahtgebunden, z.B. über das Internet gemäß IP-Standard (IP - Internet Protocol), oder drahtlos, z.B. nach GSM-Standard (GSM - Global System for Mobile Communications) oder nach DVB-IPDC Standard[1] (IPDC - Internet Protocol Data Cast), übertragen. Der Empfänger kann in Form einer Set-Top-Box, die mit einem Wiedergabegerät, insbesondere einem Fernsehgerät, verbunden ist, ausgestaltet sein. In einer Variante hierzu kann der Empfänger in einem tragbaren Gerät, z.B. einem Laptop oder Mobiltelefon, integriert sein.

Im vorliegenden Ausführungsbeispiel sollen an den Empfänger Teletextseiten wiederkehrend übermittelt werden. Hierzu werden die Teletextseiten als statische Objekte S0, ..., S5 mittels eines Karussells K im Sender organisiert und übertragen. Dem Empfänger werden die statischen Objekte gemäß einem Übertragungsmusters FDT angekündigt. Diese Art der Übertragung wird im Folgenden als Karussellübertragung KUE bezeichnet. In [2] ist ein Protokoll beschrieben, mit dem eine Übertragung statischer Objekte und eines Übertragungsmusters über UDP/IP (UDP - User Datagram Protocol) erfolgt.

Die statischen Objekte werden zu einem Karussellempfangsmodul KR des Empfängers geschickt, das die empfangenen statischen Objekte an ein Karussellverarbeitungsmittel KE weiterreicht. Dieses Karussellverarbeitungsmittel überprüft, ob die empfangenen statischen Objekte ausgewertet werden müssen. Ferner können die statischen Objekte vor oder nach der Auswertung in einem Speichermodul SP organisiert abgelegt werden. Hierbei ist unter Auswerten zu verstehen, dass empfangene statische Objekte analysiert und ggfs. in vorhandene gespeicherte statische Objekte eingefügt und/oder Referenzen zwischen den statischen Objekten auf Basis der empfangenen statischen Objekte angepasst werden. Automatisch oder auf Abfrage werden ein oder mehrere statische Objekte am Fernseher TV eines Benutzers ausgegeben.

Parallel zur Übermittlung von statischen Objekten über die Karussellübertragung werden Echtzeitdaten RD, wie z.B. nach dem MEPG-2 Standard kodierte Audiosignale A und Videosignale V vom Sender S zum Empfänger E übermittelt. Dazu werden die Audio- und Videosignale an ein Streamingsendemodul ST weitergereicht, welche diese nach einer optionalen übertragungsspezifischen Aufbereitung an ein Streamingempfangsmodul SR im Empfänger sendet. Dort werden, nach einer optionalen übertragungsspezifischen Aufbereitung, die Video- und Audiosignale über ein Auswahlmittel AM an den Fernseher TV zur Wiedergabe weitergeleitet. Die Übertragung erfolgt hierbei als Streamingübertragung SUE, da die Echtzeitdaten RD in Echtzeit nacheinander zum Empfänger verschickt werden.

Soll eine aktuelle Information IN, z.B. eine Eilmeldung über ein Sportergebnis, an den Empfänger übertragen werden, so wird diese an ein Verarbeitungsmodul VM übergeben. Dieses erzeugt daraus ein Änderungsobjekt SO*, welches an das Streamingsendemodul gegeben wird. Das Streamingsendemodul fügt das Änderungsobjekt SO* zwischen die Audio- und Videosignale zur Übertragung ein. Beispielsweise werden die Audio- und Videosignale jeweils mittel eines spezifischen RTP/UDP/IP Transportformats (RTP - Realtime Transportt Protocol) übertragen. Das Änderungsobjekt SO* wird in einem spezifischen RTP/UDP/IP Transportformat eingepackt und so von dem Streamingsendemodul ST zum Streamingempfangsmodul SR verschickt. Das Streamingempfangsmodul leitet die empfangenen Daten an das Auswahlmittel weiter, welches im Falle eines Erkennens des Änderungsobjekts SO* dieses an das Karussellverarbeitungsmittel KE weiterreicht. Dort wird das empfangene Änderungsobjekt SO* ausgewertet und aufgrund dieses Änderungsobjekts eine Änderung zumindest eines statischen Objekts SO1, das bspw. im Speichermodul abgelegt ist, in das geänderte statische Objekt SO1' durchgeführt. In einer Alternative hierzu kann das Änderungsobjekt ein neues statisches Objekt beschreiben, wobei eine Auswertung dahingehend durchgeführt wird, dass ein leeres, unbenutztes oder neues statisches Objekt mit dem Änderungsobjekt geändert bzw. erzeugt und initialisiert wird. Das geänderte statische Objekt SO1' wird im Speichermodul SP abgelegt und kann sofort auf dem Fernseher TV des Benutzers wiedergegeben werden.

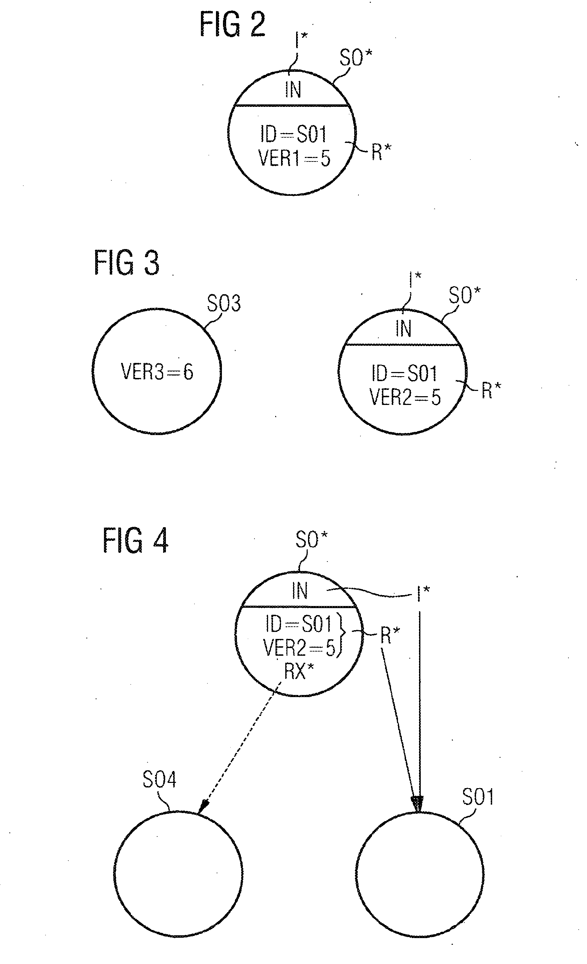

In Figur 2 ist eine Ausführungsform für das Änderungsobjekt SO* abgebildet. Dabei ist die aktuelle Nachricht IN als zu ändernde Information I* und eine Vorgehensweise zur Durchführung der Änderung als Änderungsregel R* in dem Änderungsobjekt SO* hinterlegt. Die zu ändernde Information I* umfasst bspw. eine Textnachricht, die auf einer Teletextseite ausgeben werden soll. Die Änderungsregel R* beschreibt zumindest das zu ändernde statische Objekt SO1, z.B. in Form einer I-dentifikationsmarke, in Form einer Speicheradresse im Speichermodul, ab der das zu ändernde statische Objekt zu finden ist, oder als Index in einer Liste, die auf das zu ändernde statische Objekt verweist. Im Beispiel gemäß Figur 2 soll das statische Objekt SO1 mit der zu ändernden Information I* geändert werden, wobei nach der Änderung eine Versionsnummer des zu ändernden statischen Objekts auf einen Wert einer ersten Versionsnummer VER1 = 5 gesetzt wird. Diese erste Versionsnummer VER1 wird ebenfalls in der Änderungsregel R* mitgegeben. Mit Hilfe der jeweiligen Versionsnummer kann eine Gültigkeit der einzelnen statischen Objekte verwaltet werden.

In einer weiteren Ausbildung der Erfindung, die anhand von Figur 3 erklärt wird, soll eine Änderung des zu ändernden statischen Objekts erfolgen, falls ein Wert einer Versionsnummer VER3 eines weiteren statischen Objekts einem Wert einer mit der Änderungsregel übermittelten zweiten Versionsnummer VER2 gleicht. Wie der Figur 3 zu entnehmen ist, ist die Versionsnummer des statischen Objekts SO3 VER3=6. Da VER3 > VER2 ist, wird die Änderung nicht ausgeführt. In einer alternativen Weiterbildung wird die Änderung, vorgegeben durch das Änderungsobjekt SO*, erst ausgeführt, nachdem die Versionsnummer VER3 dem Wert der zweiten Versionsnummer entspricht und/oder größer ist.

In Figur 4 ist eine weitere in der Praxis zweckmäßige Ausgestaltung der Erfindung zu sehen. Hierbei wird mit dem Änderungsobjekt SO* die zu ändernde Information I* und die Änderungsregel R* für das statische Objekt SO1 angegeben. Zum andern umfasst das Änderungsobjekt SO* eine zusätzliche Änderungsregel RX*, mit der eine weitere durchzuführende Änderung, z.B. eine Anpassung von Verweisen und/oder Referenzen zwischen den statischen Objekten, aufgeführt wird. Insbesondere, wenn mit dem zu ändernden statischen Objekt ein neues statisches Objekt gebildet wird, kann eine Änderung von Verweisen und/oder Referenzen zwischen den jeweiligen statischen Objekten notwendig werden. In Figur 4 betreffen die zu ändernde Information I* und die Änderungsregel R* das statische Objekt SO1 und die zusätzliche Änderungsregel RX* das statische Objekt SO4. Diese Abhängigkeiten sind mit Pfeilen symbolisch angegeben.

In einer Weiterbildung der Erfindung wird das Änderungsobjekt vor der Übertragung mit einem Fehlerschutzverfahren FEC zur Reduktion von Übertragungsfehlern geschützt. Dies kann mit einem Vorwärtsfehlerkorrekturverfahren, z.B. mit einem Reed-Solomon Code, erfolgen. Das Änderungsobjekt wird bspw. im Verarbeitungsmodul VM mit einem Fehlerschutz versehen. Im Auswahlmittel des Empfängers kann eine Korrektur der Fehler aufgrund einer fehlerhaften Streamingübertragung auf Basis des Fehlerschutzes erfolgen. Dem Fachmann sind weitere Fehlerschutzverfahren bekannt, so dass hierauf nicht weiter eingegangen wird.

Ferner kann in der Änderungsregel eine Zeitpunktangabe T enthalten sein, die angibt, zu welchem Zeitpunkt die Änderungsregel R*, RX* durchzuführen ist.

Mit Hilfe der Streamingübertragung ist das Änderungsobjekt in Echtzeit zum Empfänger übertragbar. Bei der Streamingübertragung können Fehler derart auftreten, dass das Änderungsobjekt im Empfänger unbrauchbar empfangen wird. Deswegen ist es in der Praxis zweckmäßig in einem Sender das zu ändernde statische Objekt SO1 auf Grundlage des Änderungsobjekts SO* in das geänderte statische Objekt SO1' zu ändern und anschließend zumindest das geänderte statische Objekt SO1' über die Karussellübertragung zu verschicken. Damit wird erreicht, dass eine Änderung, die im Falle, dass ein Empfänger aufgrund einer fehlerhaften Übertragung des Änderungsobjekts über die Streamingübertragung die Änderung nicht erhalten hat, zusätzlich über die Karussellübertragung empfangen und auswerten kann. Ist das Änderungsobjekt bereits empfangen und verarbeitet worden, so wird das mittels der Karussellübertragung empfangene geänderte statische Objekt SO1' nicht weiter ausgewertet. Damit wird eine Sicherheit bei der Übertragung von Änderungsobjekten erhöht. Werden auf Basis des Änderungsobjekts mehrere statische Objekte im Sender geändert, so werden, insbesondere alle, statischen geänderten Objekte über die Karussellübertragung übertragen.

Literaturverzeichnis
[1] DVB-IPDC, " IP Datacast over DVB-H: Content Delivery Protocols (CDP)", http://www.dvb-h-online.org/technology.htm
[2] T. Paila et al., "FLUTE - File Delivery over Unidirectional Transport", RFC 3926, IETF, Oktober 2004, http://www.ietf.org

## Patentansprüche

1. Verfahren zum Übertragen einer Änderung von einem statischen Objekt (SO1) mittels eines Änderungsobjekts (SO*) in einem Datenverteildienst, der statische Objekte (SO1, ..., S05) mittels einer Karussellübertragung (KUE) und Echtzeitdaten (RD) mittels einer Streamingübertragung (SUE) übermittelt,
**dadurch gekennzeichnet, dass**
- das Änderungsobjekt (SO*) auf Basis zumindest einer zu ändernden Information (I*) und auf Basis zumindest einer eine Vorgehensweise zur Durchführung der Änderung angebenden Änderungsregel (R*) gebildet wird,
- das Änderungsobjekt (SO*) mit der Streamingübertragung (SUE) übermittelt wird.

2. Verfahren nach Anspruch 1,
**dadurch gekennzeichnet, dass**
- das Änderungsobjekt (SO*) aus der Streamingübertragung (SUE) herausgefiltert wird,
- das zu ändernde statische Objekt (SO1) auf Grundlage des Änderungsobjekts (SO*) in das geänderte statische Objekt (SO1') geändert wird.

3. Verfahren nach einem der vorhergehenden Ansprüche,
**dadurch gekennzeichnet, dass**
aufgrund einer die Änderungsregel (R*) umfassende Identifikationsangabe (ID) das zu ändernde statische Objekt (SO1) ausgewählt wird.

4. Verfahren nach einem der vorhergehenden Ansprüche,
**dadurch gekennzeichnet, dass**
eine die Änderungsregel (R*) umfassende erste Versionsnummer (VER1) in das zu ändernde statische Objekt (SO1) eingetragen wird.

5. Verfahren nach einem der vorhergehenden Ansprüche,
**dadurch gekennzeichnet, dass**
eine die Änderungsregel (R*) umfassende Zeitpunktangabe (T) in das Änderungsobjekt (SO*) eingetragen wird, wobei die Zeitpunktangabe (T) einen Zeitpunkt zur Durchführung der Änderungsregel (R*) spezifiziert.

6. Verfahren nach einem der vorhergehenden Ansprüche,
**dadurch gekennzeichnet, dass**
aufgrund zumindest einer die Änderungsregel (R*) umfassenden zweiten Versionsnummer (VER2) die Änderung des zu ändernden statischen Objekts (SO1) durchgeführt wird, falls eine weitere Versionsnummer (VER3) eines weiteren statischen Objekts (S03) einen zur zweiten Versionsnummer (VER2) gleichen oder größeren Wert aufweist.

7. Verfahren nach einem der vorhergehenden Ansprüche,
**dadurch gekennzeichnet, dass**
aufgrund zumindest einer zusätzlichen Änderungsregel (RX*) im Änderungsobjekt (SO*) ein weiteres statisches Objekt (SO4) geändert wird.

8. Verfahren nach einem der vorhergehenden Ansprüche,
**dadurch gekennzeichnet, dass**
- in einem Sender das zu ändernde statische Objekt (SO1) auf Grundlage des Änderungsobjekts (SO*) in das geänderte statische Objekt (SO1') geändert wird,
- zumindest das geänderte statische Objekt (S01') über die Karussellübertragung (KUE) übermittelt wird.

9. Verfahren nach einem der vorhergehenden Ansprüche,
**dadurch gekennzeichnet, dass**
vor der Übertragung das,Änderungsobjekt (SO*) mit einem Fehlerschutzverfahren (FEC) zur Reduktion von Übertragungsfehlern geschützt wird.

10. Sender (S) in einem Datenverteildienst, wobei der Sender statische Objekte (SO1, ..., S05) mittels einer Karussellübertragung (KUE) und Echtzeitdaten (RD) mittels einer Streamingübertragung (SUE) übermittelt,
**dadurch gekennzeichnet, dass**
ein erstes Verarbeitungsmodul (VM) zum Bilden eines Änderungsobjekts (SO*) ausgestaltet ist, wobei das Änderungsobjekt (SO*) eine Angabe einer zu ändernden Information (I*) und eine einer Vorgehensweise zur Durchführung der Änderung angebenden Änderungsregel (R*) umfasst, und
ein Streamingsendemodul (ST) zum Übertragen des Änderungsobjekts (SO*) mittels der Streamingübertragung (SUE) ausgestaltet ist.

11. Sender (S) nach Anspruch 10,
**dadurch gekennzeichnet, dass**
das erste Verarbeitungsmodul (VM) zum Bilden des Änderungsobjekts (SO*) ausgestaltet ist, wobei das Änderungsobjekt (SO*) zumindest eine der folgenden Angaben zusätzlich umfasst:
- eine erste Versionsnummer (VER1) zum Eintragen in das zu ändernde statische Objekt (SO1);
- eine zweite Versionsnummer (VER2), wobei die Änderung des zu ändernden statischen Objekts (SO1) durchgeführt wird, falls eine weitere Versionsnummer (VER3) eines weiteren statischen Objekts (S03) einen zur zweiten Versionsnummer (VER2) gleichen oder größeren Wert aufweist;
- zumindest eine zusätzliche Änderungsregel (RX*), zum Ändern eines weiteren statischen Objekts (SO4);
- eine die Änderungsregel (R*) umfassende Zeitpunktangabe (T), wobei die Zeitpunktangabe (T) einen Zeitpunkt zur Durchführung der Änderungsregel (R*) spezifiziert.

12. Sender (S) nach einem der Ansprüche 10 bis 11,
**dadurch gekennzeichnet, dass**
das erste Verarbeitungsmodul (VM) zur Änderung des zu ändernden statischen Objekts (SO1) auf Grundlage des Änderungsobjekts (SO*) in das geänderte statische Objekt (SO1') und zum Weiterleiten zumindest des geänderten statischen Objekts (SO1') an ein Karussell (K) ausgestaltet ist,
das Karussell (K) zum Übermitteln zumindest des geänderten statischen Objekts (SO1') über die Karussellübertragung (KUE) an den Empfänger (E) ausgestaltet ist.

13. Empfänger (E) in einem Datenverteildienst, wobei der Empfänger statische Objekte (SO1, ..., S05) mittels einer Karussellübertragung (KUE) und Echtzeitdaten (RD) mittels einer Streamingübertragung (SUE) empfängt,
**dadurch gekennzeichnet, dass**
ein Auswahlmittel (AM) zum Trennen der Echtzeitdaten (RD) und
eines Änderungsobjekts (SO*) empfangen von der Streamingübertragung (SUE) ausgestaltet ist, und
ein Karussellverarbeitungsmittel (KE) zum Auswerten des Änderungsobjekts (SO*) auf Basis zumindest einer das Änderungsobjekt (SO*) umfassenden zu ändernde Information (I*) und einer Änderungsregel (R*) ausgestaltet ist.

14. Empfänger (E) nach Anspruch 13,
**dadurch gekennzeichnet, dass**
das Karussellverarbeitungsmittel (KE) zur Änderung des zu ändernden statischen Objekts (SO1) auf Grundlage des Änderungsobjekts (SO*) in das geänderte statische Objekt (SO1') ausgestaltet ist.

15. Empfänger (E) nach Anspruch 13 oder 14,
**dadurch gekennzeichnet, dass**
das Karussellverarbeitungsmittel (KE) zur Änderung des zumindest einen statischen Objekts (SO1) zusätzlich auf Basis einer der folgenden Anweisungen ausgestaltet ist:
- Auswählen des zu ändernden statischen Objekts (SO1) aufgrund einer die Änderungsregel (R*) umfassenden Identifikationsangabe (ID);
- Eintragen einer die Änderungsregel (R*) umfassende erste Versionsnummer (VER1) in das zu ändernde statische Objekt (SO1);
- Durchführen der Änderung des zu ändernden statischen Objekts (SO1) aufgrund zumindest einer die Änderungsregel (R*) umfassenden zweiten Versionsnummer (VER2), falls eine weitere Versionsnummer (VER3) eines weiteren statischen Objekts (S03) einen zur zweiten Versionsnummer (VER2) gleichen oder größeren Wert aufweist;
- Änderung eines weiteren statischen Objekts (SO4) aufgrund zumindest einer zusätzlichen Änderungsregel (RX*) im Änderungsobjekt (SO*);
- Ändern des zu ändernden statischen Objekts (SO*) auf Grundlage des über die Karussellübertragung (KUE) empfangenen Änderungsobjekts (SO*);
- Ausführen der Änderungsregel (R*) zu einer die Änderungsregel (R*) umfassenden Zeitpunktangabe (T).

16. Empfänger (E) nach einem der Ansprüche 13 bis 15,
**dadurch gekennzeichnet, dass**
ein Auswahlmittel (AM) zum Korrigieren von aufgrund einer fehlerhaften Streamingübertragung (SUE) auftretenden Fehlern auf Basis eines Fehlerschutzverfahrens (FEC) ausgestaltet ist.

## Claims

1. Method for transmission of a change to a static object (SO1) by means of a change object (SO*) in a data distribution service which communicates static objects (SO1, .., S05) by means of a carousel transmission (KUE) and real time data (RD) by means of a streaming transmission (SUE),
**characterized in that**
- the change object (SO*) is formed on the basis of at least one information item (I*) to be changed and on the basis of at least one change rule (R*) specifying a procedure for carrying out the change,
- the change object (SO*) is communicated by means of the streaming transmission (SUE).

2. Method according to Claim 1,
**characterized in that**
- the change object (SO*) is filtered out of the streaming transmission (SUE),
- the static object (SO1) to be changed is changed into the changed static object (SO1') on the basis of the change object (SO*).

3. Method according to any of the preceding claims,
**characterized in that**
the static object (SO1) to be changed is selected on the basis of an identification indication (ID) comprising the change rule (R*).

4. Method according to any of the preceding claims,
**characterized in that**
a first version number (VER1) comprising the change rule (R*) is entered into the static object (SO1) to be changed.

5. Method according to any of the preceding claims,
**characterized in that**
a time indication (T) comprising the change rule (R*) is entered into the change object (SO*), the time indication (T) specifying a time for carrying out the change rule (R*).

6. Method according to any of the preceding claims,
**characterized in that**
the change to the static object (SO1) to be changed is carried out on the basis of at least one second version number (VER2) comprising the change rule (R*) if a further version number (VER3) of a further static object (S03) has a value greater than or equal to the second version number (VER2).

7. Method according to any of the preceding claims,
**characterized in that**
a further static object (S04) is changed on the basis of at least one additional change rule (RX*) in the change object (SO*).

8. Method according to any of the preceding claims,
**characterized in that**
- in a transmitter, the static object (SO1) to be changed is changed into the changed static object (SO1') on the basis of the change object (SO*),
- at least the changed static object (SO1') is communicated via the carousel transmission (KUE).

9. Method according to any of the preceding claims,
**characterized in that**
prior to transmission, the change object (SO*) is protected by means of an error protection method (FEC) for reducing transmission errors.

10. Transmitter (S) in a data distribution service, the transmitter communicating static objects (SO1, ..., S05) by means of a carousel transmission (KUE) and real time data (RD) by means of a streaming transmission (SUE),
**characterized in that**
a first processing module (VM) is configured for forming a change object (SO*), the change object (SO*) comprising an indication of an information item (I*) to be changed and a change rule (R*) specifying a procedure for carrying out the change, and
a streaming transmission module (ST) is configured for transmitting the change object (SO*) by means of the streaming transmission (SUE).

11. Transmitter (S) according to Claim 10,
**characterized in that**
the first processing module (VM) is configured for forming the change object (SO*), the change object (SO*) additionally comprising at least one of the following indications:
- a first version number (VER1) for entering into the static object (SO1) to be changed;
- a second version number (VER2), the change to the static object (SO1) to be changed being carried out if a further version number (VER3) of a further static object (S03) has a value greater than or equal to the second version number (VER2);
- at least one additional change rule (RX*), for changing a further static object (S04);
- a time indication (T) comprising the change rule (R*), the time indication (T) specifying a time for carrying out the change rule (R*).

12. Transmitter (S) according to any of Claims 10 to 11,
**characterized in that**
the first processing module (VM) is configured for changing the static object (SO1) to be changed into the changed static object (SO1') on the basis of the change object (SO*) and for forwarding at least the changed static object (SO1') to a carousel (K), the carousel (K) is configured for communicating at least the changed static object (SO1') to the receiver (E) via the carousel transmission (KUE).

13. Receiver (E) in a data distribution service, the receiver receiving static objects (SO1, ..., S05) by means of a carousel transmission (KUE) and real time data (RD) by means of a streaming transmission (SUE),
**characterized in that**
a selection means (AM) is configured for separating the real time data (RD) and a change object (SO*) received from the streaming transmission (SUE), and
a carousel processing means (KE) is configured for evaluating the change object (SO*) on the basis of at least one information item (I*) to be changed and comprising the change object (SO*), and a change rule (R*).

14. Receiver (E) according to Claim 13,
**characterized in that**
the carousel processing means (KE) is configured for changing the static object (SO1) to be changed into the changed static object (SO1') on the basis of the change object (SO*).

15. Receiver (E) according to Claim 13 or 14,
**characterized in that**
the carousel processing means (KE) is configured for changing the at least one static object (SO1) additionally on the basis of one of the following instructions:
- selecting the static object (SO1) to be changed on the basis of an identification indication (ID) comprising the change rule (R*);
- entering a first version number (VER1) comprising the change rule (R*) into the static object (SO1) to be changed;
- carrying out the change to the static object (SO1) to be changed on the basis of at least one second version number (VER2) comprising the change rule (R*) if a further version number (VER3) of a further static object (S03) has a value greater than or equal to the second version number (VER2);
- changing a further static object (S04) on the basis of at least one additional change rule (RX*) in the change object (SO*);
- changing the static object (SO*) to be changed on the basis of the change object (SO*) received via the carousel transmission (KUE);
- implementing the change rule (R*) with respect to a time indication (T) comprising the change rule (R*).

16. Receiver (E) according to any of Claims 13 to 15,
**characterized in that**
a selection means (AM) is configured for correcting errors that occur on account of an erroneous streaming transmission (SUE) on the basis of an error protection method (FEC).

## Revendications

1. Procédé pour transmettre une modification d'un objet statique (SO1) au moyen d'un objet de modification (SO*) dans un réseau de distribution de données qui transmet des objets statiques (SO1, ..., SO5) au moyen d'une transmission carrousel (KUE) et des données temps réel (RD) au moyen d'une transmission streaming (SUE),
**caractérisé en ce que**
- l'objet de modification (SO*) est formé sur la base d'au moins une information à modifier (I*) et sur la base d'au moins une règle de modification (R*) indiquant une procédure pour effectuer la modification,
- l'objet de modification (SO*) est transmis au moyen de la transmission streaming (SUE).

2. Procédé selon la revendication 1,
**caractérisé en ce que**
- l'objet de modification (SO*) est extrait de la transmission streaming (SUE) par filtrage,
- l'objet statique à modifier (SO1) est modifié sur la base de l'objet de modification (SO*) en objet statique modifié (SO1').

3. Procédé selon l'une des revendications précédentes,
**caractérisé en ce que**
l'objet statique à modifier (SO1) est sélectionné sur la base d'une indication d'identification (ID) comprenant la règle de modification (R*).

4. Procédé selon l'une des revendications précédentes,
**caractérisé en ce que**
un premier numéro de version (VER1) comprenant la règle de modification (R*) est enregistré dans l'objet statique à modifier (SO1).

5. Procédé selon l'une des revendications précédentes,
**caractérisé en ce que**
une indication temporelle (T) comprenant la règle de modification (R*) est enregistrée dans l'objet de modification (SO*), ladite indication temporelle (T) spécifiant un instant d'exécution de la règle de modification (R*).

6. Procédé selon l'une des revendications précédentes,
**caractérisé en ce que**
la modification de l'objet statique à modifier (SO1) est effectuée sur la base d'au moins un second numéro de version (VER2) comprenant la règle de modification (R*) si un autre numéro de version (VER3) d'un autre objet statique (SO3) présente une valeur égale ou supérieure à celle du second numéro de version (VER2).

7. Procédé selon l'une des revendications précédentes,
**caractérisé en ce que**
un autre objet statique (S04) est modifié sur la base d'au moins une règle supplémentaire de modification (RX*) dans l'objet de modification (SO*).

8. Procédé selon l'une des revendications précédentes,
**caractérisé en ce que**
- l'objet statique à modifier (SO1) est modifié sur la base de l'objet de modification (SO*) en objet statique modifié (SO1') dans un émetteur,
- au moins l'objet statique modifié (SO1') est transmis par le biais de la transmission carrousel (KUE).

9. Procédé selon l'une des revendications précédentes,
**caractérisé en ce que**
l'objet de modification (SO*) est protégé avant la transmission par un procédé de prévention d'erreurs (FEC) pour réduire les erreurs de transmission.

10. Émetteur (S) dans un réseau de distribution de données, ledit émetteur transmettant des objets statiques (SO1, ..., SO5) au moyen d'une transmission carrousel (KUE) et des données temps réel (RD) au moyen d'une transmission streaming (SUE),
**caractérisé en ce que**
un premier module de traitement (VM) est conçu pour former un objet de modification (SO*), ledit objet de modification (SO*) comprenant l'indication d'une information à modifier (I*) et
une règle de modification (R*) indiquant une procédure pour effectuer la modification, et
un module d'émission en streaming (ST) est conçu pour transmettre l'objet de modification (SO*) au moyen de la transmission streaming (SUE).

11. Émetteur (S) selon la revendication 10,
**caractérisé en ce que**
le premier module de traitement (VM) est conçu pour former l'objet de modification (SO*), ledit objet de modification (SO*) comprenant en outre au moins l'une des indications suivantes .
- un premier numéro de version (VER1) à enregistrer dans l'objet statique à modifier (SO1) ;
- un second numéro de version (VER2), la modification de l'objet statique à modifier (SO1) étant effectuée si un autre numéro de version (VER3) d'un autre objet statique (SO3) présente une valeur égale ou supérieure à celle du second numéro de version (VER2) ;
- au moins une règle supplémentaire de modification (RX*) pour modifier un autre objet statique (S04) ;
- une indication temporelle (T) comprenant la règle de modification (R*), ladite indication temporelle (T) spécifiant un instant d'exécution de la règle de modification (R*).

12. Émetteur (S) selon l'une des revendications 10 à 11,
**caractérisé en ce que**
le premier module de traitement (VM) est conçu pour modifier l'objet statique à modifier (SO1) sur la base de l'objet de modification (SO*) en ledit objet statique modifié (SO1') et pour transmettre au moins ledit objet statique modifié (SO1') à un carrousel (K),
le carrousel (K) est conçu pour transmettre au moins ledit objet statique modifié (SO1') par le biais de la transmission carrousel (KUE) au récepteur (E).

13. Récepteur (E) dans un réseau de distribution de données, ledit récepteur recevant des objets statiques (SO1, ..., SO5) au moyen d'une transmission carrousel (KUE) et des données temps réel (RD) au moyen d'une transmission streaming (SUE),
**caractérisé en ce que**
un moyen de sélection (AM) est conçu pour séparer les données temps réel (RD) et un objet de modification (SO*) reçus par la transmission streaming (SUE), et
un moyen de traitement du carrousel (KE) est conçu pour évaluer l'objet de modification (SO*) sur la base d'au moins une information à modifier (I*) comprenant l'objet de modification (SO*) et d'une règle de modification (R*).

14. Récepteur (E) selon la revendication 13,
**caractérisé en ce que**
le moyen de traitement du carrousel (KE) est conçu pour modifier l'objet statique à modifier (SO1) sur la base de l'objet de modification (SO*) en ledit objet statique modifié (SO1').

15. Récepteur (E) selon la revendication 13 ou 14,
**caractérisé en ce que**
le moyen de traitement du carrousel (KE) pour modifier ledit au moins un objet statique (SO1) est conçu en outre sur la base de l'une des instructions suivantes :
- sélectionner l'objet statique à modifier (SO1) sur la base d'une indication d'identification (ID) comprenant la règle de modification (R*) ;
- enregistrer dans l'objet statique à modifier (SO1) un premier numéro de version (VER1) comprenant la règle de modification (R*) ;
- effectuer la modification de l'objet statique à modifier (SO1) sur la base d'au moins un second numéro de version (VER2) comprenant la règle de modification (R*) si un autre numéro de version (VER3) d'un autre objet statique (SO3) présente une valeur égale ou supérieure à celle du second numéro de version (VER2) ;
- modifier un autre objet statique (S04) sur la base d'au moins une règle supplémentaire de modification (RX*) dans l'objet de modification (SO*) ;
- modifier l'objet statique à modifier (SO*) sur la base de l'objet de modification (SO*) reçu par le biais de la transmission carrousel (KUE) ;
- exécuter la règle de modification (R*) selon une indication temporelle (T) comprenant la règle de modification (R*).

16. Récepteur (E) selon l'une des revendications 13 à 15,
**caractérisé en ce que**
un moyen de sélection (AM) est conçu pour corriger des erreurs survenant suite à un dysfonctionnement de la transmission streaming (SUE) sur la base d'un procédé de prévention d'erreurs (FEC).
